# EUROPÄISCHE PATENTSCHRIFT

(11) **EP 1 205 361 B1**
(45) Veröffentlichungstag und Bekanntmachung des Hinweises auf die Patenterteilung: **17.09.2008**
(21) Anmeldenummer: 01119386.9
(22) Anmeldetag: 11.08.2001
(51) Int. Cl.: B60R 21/06

(54) **Trennvorrichtung für ein Kraftfahrzeug**
Partitioning device for a motor vehicle
Dispositif de séparation pour un véhicule automobile

(30) Priorität: 09.11.2000 DE 10056671
(43) Veröffentlichungstag der Anmeldung: 15.05.2002
(73) Patentinhaber: BOS GmbH & Co. KG, 73760 Ostfildern (DE)
(72) Erfinder: Ehrenberger, Marina, 73730 Esslingen (DE); Schlecht, Werner P., 71665 Vaihingen (DE); Seel, Holger, 71134 Aidlingen (DE)
(74) Vertreter: Patentanwälte Ruff, Wilhelm, Beier, Dauster & Partner

(56) Entgegenhaltungen:
- WO-A-98/24660
- DE-C- 19 708 192
- DE-U- 29 819 293

## Beschreibung

Die Erfindung betrifft eine Trennvorrichtung für ein Kraftfahrzeug mit einem flexiblen Flächengebilde, das auf einer in einem Kassettengehäuse gelagerten Wickelwelle zwischen einer aufgerollten Ruheposition und einer mit fahrzeugfesten Halterungen verbundenen, ausgezogenen Schutzposition auf- und abrollbar gehalten ist, wobei die Wickelwelle durch eine Rückholfederanordnung in Aufrollrichtung beaufschlagt ist.

Eine solche Trennvorrichtung ist aus der WO 98/24660 bekannt. Die bekannte Trennvorrichtung weist ein flexibles Flächengebilde in Form eines Trennnetzes auf, das auf- und abrollbar auf einer in einem Kassettengehäuse drehbeweglich gelagerten Wickelwelle gehalten ist. Das Trennnetz weist an seinem vorderen Stirnende eine formstabile Auszugleiste auf, mittels der das Trennnetz in einer vertikal ausgezogenen Schutzposition in fahrzeugfesten Halterungen in einem Dachbereich des Kraftfahrzeugs festlegbar ist. Der Wickelwelle ist eine relativ stark ausgelegte Wickelfeder zugeordnet, die das Trennnetz nach dem Aushängen aus den fahrzeugfesten Halterungen automatisch in die im Kassettengehäuse eingezogene Ruheposition zurückzieht. In der eingehängten, vertikalen Schutzposition dient die Wickelfeder dazu, das Trennnetz straff zu halten. Aufgrund der relativ hohen Rückstellkräfte der Wickelfeder ist es für eine Bedienperson aufgrund der ergonomisch ungünstigen Situation relativ schwierig, das Trennnetz aus einer Ruheposition auszuziehen und in die fahrzeugfesten Halterungen einzuhängen. Da das Kassettengehäuse im Bereich eines Laderaumes des Kraftfahrzeugs untergebracht ist, muß eine Bedienperson zum Herausziehen des Trennnetzes sich zumindest teilweise in den Laderaum hineinlehnen, um die Auszugleiste zu erfassen und das Trennnetz herauszuziehen. Um einen ergonomisch günstigeren Hebel zu erhalten, wird die Bedienperson das Trennnetz zunächst etwa horizontal zu sich heranziehen, bis etwa die für das Einhängen benötigte Auszuglänge erzielt ist. Anschließend wird sie die Auszugleiste samt Trennnetz nach oben schwenken und in fahrzeugfeste Halterungen einhängen. Um zu verhindern, dass während des Einhängeversuches, bei dem das Trennnetz nahezu vertikal ausgerichtet ist und die Bedienperson mit nach vorne ausgestreckten Armen die Haltekraft gegen die Rückholkraft der Wickelfeder aufbringen muß, relativ große Kräfte für den Einhängevorgang aufgebracht werden müssen, schlägt die WO 98/24660 eine Halteeinrichtung vor, die die Rückstellkraft der Wickelfeder wenigstens teilweise aufhebt. Diese Halteeinrichtung kann manuell oder automatisch über eine die Umdrehungen der Wickelwelle bis zum Erreichen der benötigten Auszuglänge erfassende Zählschnecke in Funktion gesetzt werden und kann in entsprechend umgekehrter Weise auch wieder außer Funktion gesetzt werden, um nach dem Aushängen aus der vertikalen Schutzposition wieder ein einwandfreies selbsttätiges Aufrollen des Trennnetzes auf die Wickelwelle zu erzielen.

In der nicht vorveröffentlichten DE 199 27 384.7 ist eine Trennvorrichtung beschrieben, die ebenfalls ein bedienungsfreundliches, zumindest weitgehend kraftarmes Einhängen der Auszugleiste des Trennnetzes in die vertikale Schutzposition in entsprechenden fahrzeugfesten Halterungen vorsieht. In dieser Patentanmeldung wird die Reduzierung der Rückholkraft durch eine aus zwei Federelementen gebildete Federanordnung geschaffen, wobei das erste Federelement als mit der starken Rückholkraft versehene Wickelfeder und das zweite Federelement als mit einer schwächeren Federkraft versehene Komfortfeder gestaltet ist. Die beiden Federn sind bei dieser Lösung entweder seriell oder parallel geschaltet. Bei der seriellen Schaltung der beiden Federn sind beide Federn gleichsinnig wirksam. Ab einer definierten Auszuglänge wird die stärkere Wickelfeder außer Kraft gesetzt und gleichzeitig die schwächere Komfortfeder in Funktion gebracht. Dadurch ist ein Einhängen der Auszugleiste des Trennnetzes mit reduzierter Kraft möglich, da lediglich noch die Komfortfeder eine entsprechende Rückstellkraft aufbringt. Bei einem erneuten Aushängen und Einziehen des Trennnetzes wirkt zunächst noch die Komfortfeder. Anschließend wird über eine entsprechende mechanische Schalteinrichtung automatisch auf die stärkere Wickelfeder umgeschaltet, so dass diese den verbleibenden Einzug- und Aufrollvorgang vornimmt. Bei einer Parallelschaltung der beiden Federn sind die beiden Federn gegensinnig zueinander wirksam. Bis zu der definierten Auszuglänge ist bei einem Ausziehen des Trennnetzes aus der eingezogenen Ruheposition die stärkere Wickelfeder in Funktion. Nach dem Umschalten wirkt der stärkeren Wickelfeder die schwächere Komfortfeder entgegen, wodurch die Rückholkraft der Wickelfeder herabgesetzt wird. Hierdurch wird in gleicher Weise für das Einhängen in die fahrzeugfesten Halterungen eine reduzierte Einhängekraft benötigt, wodurch ein wesentlich komfortableres Einhängen durch die entsprechende Bedienperson erzielbar ist, als dies bei Trenneinrichtungen ohne eine Komfortlösung der Fall war.

Aufgabe der Erfindung ist es, eine Trennvorrichtung der eingangs genannten Art zu schaffen, die einen weiter verbesserten Komfort für eine Bedienperson bei der Überführung des Flächengebildes in die vertikale Schutzposition gewährleistet.

Diese Aufgabe wird dadurch gelöst, dass eine Schaltung gemäß dem kennzeichnenden Teil des Anspruchs 1 vorgesehen ist. . Dadurch kann vorzugsweise durch eine kurze Unterbrechung des Ausziehvorganges in einer beliebigen Auszugstellung oder auch in einer längenmäßig vorgegebenen Auszugstellung der Umschaltvorgang auf die schwache oder vollständig ausgeschaltete Rückhol- oder Aufwickelkraft erfolgen. Dies kann vorteilhaft auch mehrmals während eines Auszuges der Fall sein, da das Zeitglied immer wieder in Funktionsstellung zurückschaltet. Die Schaltung wie auch das Zeitglied sind vorzugsweise mechanisch gestaltet, können aber auch elektrisch, pneumatisch oder hydraulisch ausgeführt sein. Die Umschaltung von der stärkeren Aufwickelkraft zum kraftlosen oder kraftarmen Auszugzustand erfolgt vorzugsweise wegabhängig, die Rückschaltung vom kraftlosen oder kraftarmen Zustand zur starken Aufwickelfunktion hingegen zeitabhängig.

In Ausgestaltung der Erfindung ist die Rückholfederanordnung durch eine serielle Schaltung einer stärkeren Wickelfeder und einer gleichsinnig wirksamen schwächeren Komfortfeder gebildet, wobei die Schaltung derart gestaltet ist, dass zwischen der aufgerollten Ruheposition und der Auszugstellung eine stärkere Aufwickelkraft und ab der Auszugstellung zeitlich begrenzt eine geringere Aufwickelkraft wirksam ist, und wobei der Schaltung das Zeitglied derart zugeordnet ist, dass die Wirksamkeit der geringeren Aufwickelkraft auf eine definierte Zeitspanne begrenzt ist und nach Ablauf der Zeitspanne eine Umschaltung auf die stärkere Aufwickelkraft erfolgt.

Die grundsätzliche Federschaltfunktion sowie die grundsätzlichen Vorteile entsprechen der in der DE 199 27 384.7 bereits offenbarten Lösung. Bei einer seriellen Schaltung sind die stärkere Wickelfeder und die schwächere Komfortfeder gleichsinnig zueinander wirksam.Bei der seriellen Schaltung wird die Wickelfeder in einfacher Weise in der ersten Auszugstellung ausgeschaltet und lediglich noch die schwächere Komfortfeder in Kraft gesetzt. Im Gegensatz zu der dort beschriebenen Lösung sieht die erfindungsgemäße Lösung keine wegabhängige, sondern vielmehr eine zeitabhängige Umschaltung von der schwächeren zur stärkeren Aufwickelkraft vor. Durch das Zeitglied wird die geringe Aufwickelkraft über eine definierte Zeitspanne aufrechterhalten, die von der Gestaltung des Zeitgliedes und der Einbindung des Zeitgliedes in die Schaltung abhängt. Dadurch steht für eine Bedienperson mehr Zeit zur Verfügung, um das flexible Flächengebilde, insbesondere das Trennnetz, von der ersten Auszugstellung in die fahrzeugfesten Halterungen einzuhängen, ohne dass zwischenzeitlich wieder die erhöhte Rückholkraft in Funktion tritt. Zudem wird nach dem Einhängen in die Schutzposition nach Ablauf der Zeitspanne automatisch auf die stärkere Aufwickelkraft umgeschaltet, so dass beim erneuten Einziehen in die Ruheposition sofort die stärkere Aufwickelkraft wirksam ist.

In weiterer Ausgestaltung der Erfindung ist zur Erzielung der Schaltung der Wickelfeder und der Komfortfeder eine Schalteinrichtung vorgesehen, die ein Schaltglied aufweist, das mittels einer Verzahnung mit dem Zeitglied zusammenwirkt. Die Verzahnung bildet ein Getriebe, dessen Übersetzungsverhältnis geeignet ist, den gewünschten Zeitraum zu definieren, der für das komfortable Einhängen mit reduzierter Rückholkraft vorhanden sein soll.

In weiterer Ausgestaltung der Erfindung ist das Zeitglied als mit einem Ritzel versehenes Drehglied gestaltet, das exzentrisch zu einer Drehachse der Wickelwelle gehäusefest positioniert ist. Das Zeitglied ist insbesondere als Viskositätsbremse gestaltet.

In weiterer Ausgestaltung ist das Schaltglied zumindest über einen Teilabschnitt seines Umfangs mit einer Umfangsverzahnung versehen. Die Zähnezahl des Ritzels einerseits und der Radius sowie die Zähnezahl der Umfangsverzahnung andererseits definieren das Übersetzungsverhältnis zwischen dem Schaltglied und der Viskositätsbremse, d.h. dem Zeitglied, so dass die Zeitspanne, die für eine Wirksamkeit der geringeren Aufwickelkraft zur Verfügung steht, entsprechend abgestimmt werden kann.

Weitere Vorteile und Merkmale der Erfindung ergeben sich aus den Ansprüchen sowie aus der nachfolgenden Beschreibung von bevorzugten Ausführungsbeispielen der Erfindung, die anhand der Zeichnungen dargestellt sind.
- Fig. 1: zeigt in einer perspektivischen Explosionsdarstellung einer erste Ausführungsform einer erfindungsgemäßen Trennvorrichtung,
- Fig. 2: in vergrößerter, teilweise zusammengebauter Explosionsdarstellung die Trennvorrichtung nach Fig. 1 und
- Fig. 3: eine Schalteinrichtung für eine weitere Ausführungsform einer erfindungsgemäßen Trennvorrichtung, ähnlich Fig. 1 und ebenfalls in einer Explosionsdarstellung.

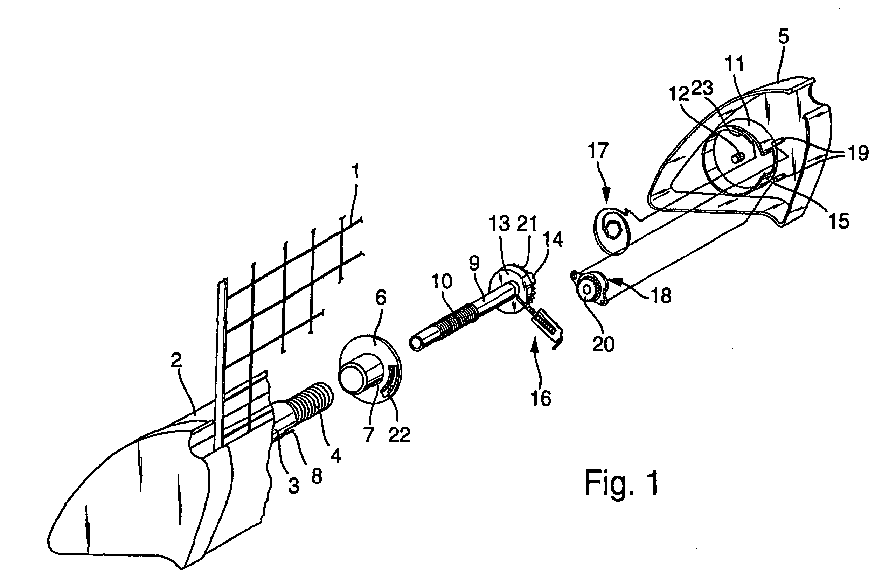

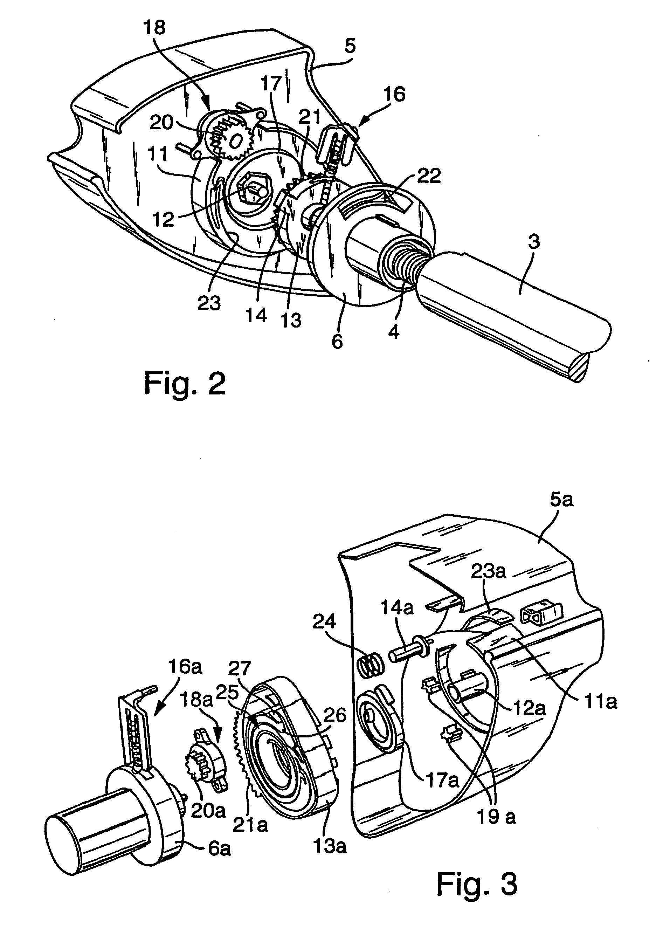

Die Trennvorrichtung gemäß den Fig. 1 und 2 weist als flexibles Flächengebilde ein Trennnetz 1 auf, das auf einer Wickelwelle 3 auf- und abrollbar gehalten ist. Die Wickelwelle 3 ist in einem Kassettengehäuse 2 drehbeweglich gelagert. Die Wickelwelle 3 ist als Hohlwelle ausgeführt, in der eine als Schraubenfeder gestaltete Wickelfeder 4 angeordnet ist. Wie anhand der Fig. 1 erkennbar ist, wird die Wickelfeder 4 mit einem äußeren Stirnende auf einer Nabe 9 eines Schaltgliedes 13 im Bereich eines auf der Nabe 9 vorgesehenen Außengewindes 10 befestigt. Das Schaltglied 13 ist mit seiner Nabe 9 koaxial zur Wickelwelle 3 in ein Stirnende der Wickelwelle 3 einschiebbar. Das Schaltglied 13 weist an einem von der Wickelwelle 3 abgelegenen Stirnende der Nabe 9 eine radiale Ringschulter auf, die mit einem radial nach außen ragenden Anschlagnocken 14 versehen ist. Mittels einer entsprechenden zentralen Lagerbohrung auf der der Nabe 9 gegenüberliegenden Stirnseite der Ringschulter ist das Schaltglied 13 in einem gehäusefesten Seitenteil 5 des Kassettengehäuses 2 auf einem zentralen Lagerzapfen 12 begrenzt drehbeweglich gelagert. Zur Aufnahme der Ringschulter des Schaltgliedes 13 weist das Seitenteil 5 einen becherartigen Gehäuseabschnitt 11 auf, der im Bereich des Anschlagnockens 14 mit einer Aussparung 15 versehen ist, die über einen definierten Kreisbogen des becherförmigen Gehäuseabschnitts 11 verläuft. Die Aussparung 15 dient dazu, ein Zeitglied in Form einer Viskositätsbremse 18, die beim dargestellten Ausführungsbeispiel als Silikonbremse gestaltet ist, nahe an das Schaltglied 13 heranzusetzen.

In der Ringschulter des Schaltgliedes 13 ist ein radial linearbeweglicher Schieber 16 gelagert, der mit einem an seinem äußeren Stirnende axial zur Wickelwelle 3 hin abragenden Zählfinger versehen ist. Der Schieber 16 ist durch eine Druckfeder radial nach außen federbeaufschlagt. Mit dem Schieber 16 und dem zugeordneten Zählfinger wirkt eine Zählschnecke zusammen, die als spiralförmige Kulissenführung in einer dem Schaltglied 13 zugewandten Stirnseite einer Ringschulter einer Lagerhülse 6 vorgesehen ist. Die Lagerhülse 6 ist mit einem Steckhülsenabschnitt stirnseitig in die Wickelwelle 3 einschiebbar und mittels einer Nut/Federanordnung 7, 8 drehschlüssig mit dieser verbindbar. Die als Zählschnecke dienende Spiralnut weist in einem radial äußeren Spiralgang eine federelastisch nachgiebige Anschlaglasche 22 auf, die in einem Drehsinn eine Arretierung für den Zählfinger des Schiebers 16 bildet und als Weiche für den Zählfinger dienen kann, wenn die Druckkraft auf den Schieber durch eine entsprechende Gegenkraft ausgeschaltet ist. Im entgegengesetzten Drehsinn kann der Zählfinger des Schiebers 16 die Anschlaglasche 22 unter elastischer Biegung nach innen überlaufen. Die Zählschnecke und der zugeordnete Schieber 16 sowie der angeformte Zählfinger können entsprechend den in der DE 199 27 384.7 beschriebenen Ausführungsformen gestaltet sein.

Das Schaltglied 13 ist auf seiner dem Seitenteil 5 zugewandten Stirnseite konzentrisch zu der auf den Lagerzapfen 12 aufsteckbaren Lageraufnahme mit einem nicht sichtbaren Sechskantkopf versehen, auf dem drehschlüssig ein sechskantförmig gestaltetes inneres Ringende einer Spiralfeder 17 formschlüssig aufschiebbar ist. Ein äußeres Stirnende der Spiralfeder 17 ist in einen gegenüber der zylindrischen Wandung des becherförmigen Gehäuseabschnittes 11 spiralartig weiter nach innen führenden Kurvensteg 23 eingehängt, wie anhand der Fig. 1 und 2 erkennbar ist. Der Steuersteg 23 (Kurvensteg) dient zusätzlich dazu, den Drehweg des Anschlagnockens 14 zu begrenzen und den Schieber 16 zusammen mit dem Zählfinger bei einer entsprechenden Drehung des Schaltgliedes 13 radial nach innen einzusteuern.

Der Drehweg des Schaltgliedes 13 ist auf etwa 270° begrenzt. Die Begrenzung erfolgt durch das Zusammenwirken des Anschlagnockens 14 mit dem in Umfangsrichtung vorderen oder rückseitigen Ende des Steuersteges 23. Der Anschlagnocken 14 liegt somit entweder an dem einen Ende des Steuersteges 23 an, an dem auch die Spiralfeder 17 eingehängt ist, oder der Anschlagnocken 14 kommt an der gegenüberliegenden Bogenschräge des Steuersteges 23 zur Anlage, in der der Steuersteg 23 sich von der zylindrischen Wandung des Gehäuseabschnittes 11 allmählich spiralartig nach innen einbiegend erstreckt. Der Steuersteg 23 ist einstückig mit dem Gehäuseabschnitt 11 und dem Seitenteil 5 gestaltet.

Die Silikonbremse 18 ist über zwei Haltezapfen 19 fest mit dem Seitenteil 5 verbindbar. Die Silikonbremse weist auf ihrer dem Schaltglied 13 zugewandten Seite ein Ritzel 20 auf, das mit einer Umfangsverzahnung 21 des Schaltgliedes 13 kämmt. Die Umfangsverzahnung 21 ist radial innerhalb der Bewegungsbahn des Anschlagnockens 14 einstückig an der vorderen Stirnseite der Ringschulter des Schaltgliedes 13 angeformt. Die Umfangsverzahnung 21 muss sich nicht über den Gesamtumfang des Schaltgliedes 13 erstrecken, da das Schaltglied 13 keine vollständige Umdrehung durchführen kann.

Die Spiralfeder 17 dient als Komfortfeder im Sinne der Erfindung.

Nachfolgend wird die Funktionsweise der vorliegenden Trennvorrichtung nach den Fig. 1 und 2 beschrieben, wobei die grundsätzliche Funktion, insbesondere des Umschaltens von stärkerer Wickelfeder 4 auf schwächere Komfortfeder 17 der in der DE 199 27 384.7 beschriebenen Lösung entspricht. Beim dargestellten Ausführungsbeispiel sind die Wickelfeder 4 und die als Komfortfeder dienende Spiralfeder 17 gleichsinnig wirksam, so dass die Wickelfeder 4 und die Spiralfeder 17 als serielle Schaltung gestaltet sind.

In der aufgerollten Ruheposition des Trennnetzes 1 liegt der Anschlagnocken 14 des Schaltgliedes 13 im Bereich des Steuersteges 23 durch die Kraft der Wickelfeder 4, die mit ihrem dem Schaltglied 13 abgewandten Stirnende an der Wickelwelle 3 angreift, an. Das Schaltglied 13 mit seinem Anschlagnocken 14 dient somit als gehäusefeste Abstützung für die Wickelfeder 4 in dieser Position. Daran ändert sich auch während des beginnenden Ausziehvorganges des Trennnetzes 1 nichts. Erst ab einer definierten Auszuglänge, die wenigstens einer Umdrehung des Zählfingers in der Spiralnut, d.h. einem wenigstens einmaligen Überfahren der Anschlaglasche 22 entspricht, kann eine Umschaltung auf die geringe oder nahezu nicht vorhandene Aufwickelkraft - je nach Gestaltung der Spiralfeder 17 - erfolgen. Je nach gewählter Auszuglänge wird die Spiralführung ein- oder mehrmals durchlaufen, unter ein- oder mehrmaligem Überfahren der Anschlaglasche 22. Bei jedem Überfahrvorgang kommt der in der Spiralführung wandernde Zählfinger unter Wegdrücken der Anschlaglasche 22 über diese hinweg. Durch ein kurzzeitiges Nachlassen der Ausziehkraft am Trennnetz 1 wird die Wickelwelle 3 durch die noch vorhandene Rückstellkraft der Wickelfeder 4 wieder um einen gewissen Betrag zurückgezogen, wodurch auch der Zählfinger zusammen mit dem Schieber 16 wieder in der Spiralnut einen geringen Weg zurückläuft. Dann kommt er an der Anschlaglasche 22 von der gegenüberliegenden Seite her zur Anlage, so dass die Anschlaglasche 22 ihre Sperrwirkung entfaltet. Ab diesem Zeitpunkt ist die Wickelfeder 4 außer Kraft gesetzt, da das Schaltglied 13 nun an der mit der Wickelwelle 3 drehschlüssigen Lagerhülse 6 blockiert ist. Nun kann die Wickelwelle 3 und das Trennnetz 1 mit reduzierter Kraft bewegt werden, da nunmehr lediglich die Spiralfeder 17 in Kraft tritt. Die Spiralfeder 17 dient als Triebfeder und dreht im Stillstand des Trennnetzes 1, d.h. ohne weiteren Auszug, das Schaltglied 13 gegen die Bremskraft des Zeitgliedes, d.h. der Silikonbremse 20, allmählich zurück, bis das Schaltglied 13 erneut am Steuersteg 23 gehäusefest anläuft. Kurz bevor der Anschlagnocken 14 die Bogenschräge des Steuersteges 23 erreicht hat, läuft der Zählfinger und der Schieber 16 an der Bogenschräge und an dem Steuerstück 23 auf, wodurch der Zählfinger und der Schieber 16 gegen die Druckkraft ihrer Druckfeder beim Entlanggleiten an dem Steuersteg 23 radial nach innen zurückgedrückt werden. Dadurch wird der Zählfinger unterhalb der als Weiche gestalteten Anschlaglasche 22 in den nächstinneren Spiralgang zurückgedrückt, wodurch auch die Sperrung der Wickelfeder 4 wieder aufgehoben ist. Die als Triebfeder dienende Spiralfeder 17 muss lediglich so stark ausgelegt sein, dass sie das Schaltglied 13 gegen die Bremskraft des Zeitgliedes 20 verdrehen kann. Eine Rückholfunktion für das Trennnetz hingegen ist nicht notwendig, kann aber zusätzlich noch vorgesehen sein. Der Bedienperson steht somit genügend Zeit zur Verfügung, das Trennnetz 1 endgültig in die fahrzeugfesten Halterungen einzuhängen, bevor die Rückholkraft der Wickelfeder 4 wieder ungebremst zum Einsatz kommt. Durch das Zeitglied ist auch gewährleistet, dass bei einem erneuten Aushängen der Auszugleiste aus der eingehängten Schutzposition sofort die Rückholkraft der starken Wickelfeder einsetzt.

Das Trennnetz 1 wird aus der eingezogenen Ruheposition bis in eine erste Auszugstellung ausgezogen, in der vorzugsweise die Auszuglänge des Trennnetzes 1 geringer ist als die für das Einhängen in die fahrzeugfesten Halterungen benötigte Auszuglänge. Das weitere Ausziehen bis zur für das Einhängen benötigten Auszuglänge ab dieser ersten Auszugstellung erfolgt lediglich noch gegen die Rückholkraft der Spiralfeder 17, solange das Zeitglied wirksam ist.

Wesentlicher Vorteil ist es, dass das Zuschalten des Zeitgliedes auch mehrmals erfolgen kann, indem das Trennnetz nach Ablauf der ersten Zeitspanne noch einmal um wenigstens eine Spiralumdrehung ausgezogen wird, wodurch erneut der zuvor beschriebene Schaltvorgang abläuft und die starke Wickelfeder erneut ausgeschaltet wird unter gleichzeitiger Zuschaltung des Zeitgliedes.

Bei einem erneuten Aushängen des Trennnetzes 1 aus der eingehängten Schutzposition kommt sofort die stärkere Wickelfeder 4 zum Einsatz, da zwischenzeitlich die als Triebfeder dienende Spiralfeder 17 das Schaltglied 13 und den Anschlagnocken 14 gegen die Bremskraft der Silikonbremse 20 wieder an den im Uhrzeigersinn vorderen Anschlag des Steuersteges 23 herangeführt hat, an dem auch die Spiralfeder 17 eingehängt ist.

Beim Ausführungsbeispiel nach Fig. 3 wird die gleiche Funktion erzielt wie beim Ausführungsbeispiel nach den Fig. 1 und 2. Wesentlicher Unterschied beim Ausführungsbeispiel nach Fig. 3 ist es, dass die Schaltvorgänge zum Aus- und Einschalten der starken Aufrollkraft der Wickelfeder 4 anders ablaufen, als dies beim Ausführungsbeispiel der Fig. 1 und 2 der Fall war, und dass anstelle einer seriellen Schaltung eine parallele Schaltung der Wickelfeder und der Spiralfeder 17a vorgesehen sind. Der besseren Übersichtlichkeit halber sind beim Ausführungsbeispiel nach Fig. 3 funktionsgleiche Teile mit den gleichen Bezugszeichen, lediglich unter Hinzufügen des Buchstabens a versehen. Beim Ausführungsbeispiel nach Fig. 3 ist die Lagerhülse 6a ebenfalls drehschlüssig mit der nicht näher dargestellten Wickelwelle verbunden. Im Gegensatz zum Ausführungsbeispiel nach den Fig. 1 und 2 ist jedoch bei dieser Ausführung der Schieber 16a mit dem zugeordneten Zählfinger in der Lagerhülse 6a radial linearbeweglich gelagert, und die Zählschnecke 25 ist an dem Schaltglied 13a vorgesehen. Die Zählschnecke 25 weist eine Spiralnut auf, die in einem radial äußeren Bereich mit einer Anschlagschikane 26 versehen ist. Unmittelbar benachbart zu der Anschlagschikane 26 ist eine lediglich angedeutete axiale Lageraufnahme 27 für einen achsparallel zur Drehachse des Schaltgliedes 13a linearbeweglichen Anschlagstift 14a vorgesehen, der durch eine Druckfeder 24 in einer von der Lagerhülse 6a weggerichteten Axialrichtung federbeaufschlagt ist. Das mit der Zählschnecke 25 versehene Schaltglied 13a ist auf einem Lagerzapfen 12a des Seitenteiles 5a in einem Gehäuseabschnitt 11a begrenzt drehbeweglich gelagert, wobei die Drehbeweglichkeit auf einen Drehwinkel von weniger als 90° begrenzt ist. Die Begrenzung der Drehbeweglichkeit des Schaltgliedes 13a erfolgt durch den Anschlagstift 14a, der an gegenüberliegenden Seitenkanten des offenen, becherartigen Gehäuseabschnittes 11a anschlägt. Axial auf der dem Schaltglied 13a gegenüberliegenden Seite ist einem rückseitigen Stirnende des Anschlagstiftes 14a eine Steuerkontur 23a zugeordnet, die eine in axialer Richtung - auf die Axialbeweglichkeit des Anschlagstiftes 14a bezogen - erfolgende Steigung aufweist. Der Anschlagstift 14a ist in einem radial ausgebuchteten Bereich des Schaltgliedes 13a vorgesehen und befindet sich somit derart auf Höhe der Seitenkanten der Wandungen des Gehäuseabschnittes 11a, dass er bei einer Drehung des Schaltgliedes 13a an der jeweiligen Seitenkante anschlägt. Gleichzeitig wird er in seiner Axialbewegung durch das Entlangfahren an der Steuerkontur 23a geführt, wodurch er axial aus der Lageraufnahme 27 der Spiralnut heraustreten oder in diese eintreten kann.

Zusätzlich ist dem Schaltglied 13a als Zeitglied eine Silikonbremse 18a zugeordnet, die am Seitenteil 5a über die Halteböcke 19a befestigt wird. Die Silikonbremse 18a weist ein Ritzel 20a auf, das mit einer Umfangsverzahnung 21a des Schaltgliedes 13a kämmt. Die Umfangsverzahnung 21a ist lediglich über einen Teilbereich des Umfanges des Schaltgliedes 13a entsprechend der begrenzten Drehbeweglichkeit des Schaltgliedes 13a ausgebildet.

Die Funktionsweise der Trennvorrichtung nach Fig. 3 ist wie folgt:

In der eingezogenen Ruheposition des Trennnetzes ist die Wickelwelle durch die nicht dargestellte Wickelfeder in einer Ausgangsposition. Die Wickelfeder ist bei dieser Ausführung auf ihrer zum Seitenteil gegenüberliegenden Seite gehäusefest abgestützt und mit dem anderen Stirnende an der Wickelwelle festgelegt. Das Schaltglied 13a ist durch den Anschlagstift 14a ebenfalls in einer gehäusefesten Endposition positioniert. Beim beginnenden Ausziehen des Trennnetzes läuft somit der Zählfinger des Schiebers 16a in der Zählschnecke 25 allmählich radial nach außen, bis er in der Anschlagschikane 26 zur Anlage kommt. Der Anschlagstift 14a befindet sich in seiner den an die Anschlagschikane 26 anschließenden Spiralgang blockierenden Sperrposition. Durch ein kurzzeitiges Loslassen des Trennnetzes möchte die Wickelwelle und damit auch der Zählfinger sich im Gegenuhrzeigersinn zurückdrehen, und der Zählfinger schlägt an dem Anschlagstift 14a an. Dadurch wird die Kraft der Wickelfeder auf das Schaltglied 13a übertragen. Dem Schaltglied 13a ist jedoch die Spiralfeder 17a zugeordnet, die sich mit ihrem anderen Ende am Seitenteil 5a abstützt. Die Spiralfeder 17a ist im Gegensatz zur zuvor beschriebenen Lösung gegensinnig zur Wickelfeder wirksam, so dass sich hier funktional eine Parallelschaltung der Wickelfeder und der als Komfortfeder dienenden Spiralfeder 17a ergibt. Die Federkraft der Spiralfeder 17a ist geringer als die entgegengesetzt wirkende Wickelkraft der Wickelfeder. Dadurch wird die Aufwickelkraft der Wickelfeder ab diesem Umschaltvorgang durch die entgegengesetzte Kraft der Spiralfeder 17a reduziert, so dass lediglich eine erheblich reduzierte Rückholkraft wirksam ist. Diese dient als Triebkraft für die Verdrehung des Schaltgliedes 13a gegen die Bremskraft der als Zeitglied arbeitenden Silikonbremse 18a, die im entgegengesetzten Drehsinn freiläuft. Zusätzlich kann auch noch eine Rückholfunktion für das Trennnetz 1a erzielt werden. Während des Drehvorganges des Schaltgliedes 13a läuft der Anschlagstift 14a entlang der in dieser Drehrichtung abfallenden Steuerkontur 23a, wodurch der Anschlagstift 14a allmählich nach hinten aus der Lageraufnahme 27 innerhalb der Zählschnecke herausgesteuert wird. Am - im Gegenuhrzeigersinn gesehen - rückseitigen Ende der Aussparung in dem becherförmigen Gehäuseabschnitt 11a schlägt der Anschlagstift 14a an der Seitenkante der Wandungen des Gehäuseabschnittes 11a an und ist gleichzeitig vollständig aus der Spiralnut im Bereich der Lageraufnahme 27 zurückgezogen. Dadurch wird der Zählfinger des Schiebers 16a und damit auch die Wickelfeder wieder freigegeben, wohingegen als Triebfeder die Spiralfeder 17a durch den Anschlag des Schaltgliedes 13a am Gehäuse wieder außer Kraft gesetzt ist. Die starke Aufwickelkraft der Wickelfeder zieht somit das Trennnetz wieder in Aufwickelrichtung zurück, wohingegen durch den Anschlag des Schaltgliedes 13a das Zeitglied außer Kraft gesetzt ist.

Die Zählschnecke 25 des Schaltgliedes 13a ist zudem derart ausgeführt, dass im äußersten Spiralgang der Zählfinger mehrfach umlaufen kann, was insbesondere bei umgeklappter Rückenlehne vorteilhaft ist, da hier ein sehr großer Netzauszug benötigt wird. Anhand der Fig. 3 ist die Gestaltung der Zählschnecke 25 einschließlich der nicht näher bezeichneten nachgiebigen Laschenweiche, die ein Einsteuern des Zählfingers in weiter innenliegende Spiralgänge ermöglicht, erkennbar. Hierauf wird an dieser Stelle ausdrücklich Bezug genommen.

## Patentansprüche

1. Trennvorrichtung für ein Kraftfahrzeug mit einem flexiblen Flächengebilde (1;1a), das auf einer in einem Kassettengehäuse (2) gelagerten Wickelwelle (3) zwischen einer aufgerollten Ruheposition und einer mit fahrzeugfesten Halterungen verbundenen, ausgezogenen Schutzposition auf- und abrollb gehalten ist, wobei die Wickelwelle (3) durch eine Rückholfederanordnung (4, 17; 17a) in Aufrollrichtung beaufschlagt ist,
**dadurch gekennzeichnet,**
**dass** eine Schaltung mit einem koaxial zur Wickelwelle (3) angeordneten und begrenzt drehweglichen Schaltglied (13 ; 13a) vorgesehen ist, die mittels eines Zeitgliedes (18; 18a) die Aufwickelkraft der Rückholfederanordnung (4, 17; 17a) in einer Auszugstellung des Flächengebildes (1; 1a) zwischen der aufgerollten Ruheposition und der ausgezogenen Schutzposition zeitlich begrenzt reduziert oder ausschaltet und nach einer durch das Zeitglied (18; 18a) vorgegebenen Zeitspanne wieder zuschaltet.

2. Trennvorrichtung nach Anspruch 1, **dadurch gekennzeichnet, dass** die Rückholfederanordnung (4, 17; 17a) durch eine serielle Schaltung einer stärkeren Wickelfeder (4) und einer gleichsinnig wirksamen, schwächeren Komfortfeder (17; 17a) gebildet ist, wobei diese Schaltung derart gestaltet ist, dass zwischen der aufgerollten Ruheposition und der Auszugstellung eine stärkere Aufwickelkraft und ab der Auszugstellung zeitlich begrenzt eine geringere Aufwickelkraft wirksam ist, und wobei dieser Schaltung das Zeitglied (18; 18a) derart zugeordnet ist, dass die Wirksamkeit der geringeren Aufwickelkraft auf eine definierte Zeitspanne begrenzt ist und nach Ablauf der Zeitspanne eine Umschaltung auf die stärkere Aufwickelkraft erfolgt.

3. Trennvorrichtung nach Anspruch 1 oder 2, **dadurch gekennzeichnet, dass** das Zeitglied (18) entgegen der Aufwickelrichtung mit einem Freilauf versehen ist.

4. Trennvorrichtung nach Anspruch 1, 2 oder 3, **dadurch gekennzeichnet, dass** als Zeitglied eine Viskositätsbremse, insbesondere eine Silikon bremse (18) vorgesehen ist.

5. Trennvorrichtung nach Anspruch 2 oder 3, **dadurch gekennzeichnet, dass** zur Erzielung der Schaltung der Wickelfeder (4) und der Komfortfeder (17) eine Schalteinrichtung (13, 6, 16, 22) vorgesehen ist, die ein Schaltglied (13; 13a) aufweist, das mittels einer Verzahnung (21) mit dem Zeitglied (18, 20) zusammenwirkt.

6. Trennvorrichtung nach Anspruch 5, **dadurch gekennzeichnet, dass** das Zeitglied (18, 20) als mit einem Ritzel versehenes Drehglied gestaltet ist, das exzentrisch zu einer Drehachse der Wickelwelle (3) gehäusefest positioniert ist.

7. Trennvorrichtung nach Anspruch 5, **dadurch gekennzeichnet, dass** zumindest ein Teilabschnitt des Umfangs des Schaltgliedes (13; 13a) mit einer Umfangsverzahnung (21; 21a) versehen ist.

## Claims

1. Separation device for a motor vehicle with a flexible flat shaped article (1; 1 a) which is held on a winding shaft (3) located in a box housing (2) between a rolled-in rest position and a pulled-out protective position permanently connected to the vehicle with holding devices in a manner such that it can be rolled in and rolled out, where a return spring arrangement (4; 17; 17a) exerts pressure in the roll-in direction to the winding shaft (3),
**characterized in that**
a switch is provided with a switch element (13; 13a) arranged coaxially with respect to the winding shaft (3) and in a manner allowing limited rotation, which reduces with time limitation, or switches off by means of a timing element (18, 18a), the roll-up force of the return spring arrangement (4, 17; 17a) in a pull-out position of the flat shaped article (1; 1 a) between a rolled-in rest position and a pulled-out protective position, or which switches the timing element (18; 18a) on again after a predetermined time period.

2. Separation device according to Claim 1, **characterized in that** the return spring arrangement (4, 17; 17a) is formed by a serial connection of a stronger winding spring (4) and a weaker easy-to-use spring (17; 17a) acting in the same direction, where this switch is designed in a manner such that a stronger roll-up force is exerted between the rolled-up rest position and the pull-out position, and from the pull-out position onwards a weaker pull-up force is exerted with time limitation, and where this switch is associated with the timing element (18; 18a) in a manner such that the effectiveness of the lower winding force is limited to a predefined time period, and switchover to the stronger winding force occurs after the elapse of the time period.

3. Separation device according to Claim 1 or 2, **characterized in that** the timing element (18) is provided with an idle in the opposite direction of the winding direction.

4. Separation device according to Claim 1, 2 or 3, **characterized in that** a viscosity brake, in particular a silicon brake (18), is used as timing element.

5. Separation device according to Claim 2 or 3, **characterized in that** a switch device (13, 6, 16, 22) is provided to achieve the switching of the winding spring (4) and the easy-to-use spring (17) and has a switch element (13; 13a), which interacts with the timing element (18, 20) by means of toothing (21).

6. Separation device according to Claim 5, **characterized in that** the timing element (18, 20) is designed as a rotating element provided with a pinion, which is positioned with permanent attachment to the housing in a position which is off-center to the axis of rotation of the winding shaft (3).

7. Separation device according to Claim 5, **characterized in that** at least a partial section of the circumference of the timing element (13; 13a) is provided with circumferential toothing (21; 21a).

## Revendications

1. Dispositif de séparation pour un véhicule automobile avec une structure plane souple (1 ; 1a) maintenue sur un arbre d'enroulement (3) logé dans un boîtier (2) de manière à pouvoir se dérouler et s'enrouler entre une position de repos enroulée et une position de protection déroulée en liaison avec des fixations montées à demeure dans le véhicule, sachant que l'arbre d'enroulement (3) est sollicité par un système à ressorts de rappel (4, 17 ; 17a) dans le sens d'enroulement,
**caractérisé en ce**
**qu'**est prévu un mouvement avec un élément de commutation (13 ; 13a) à rotation limitée et coaxial à l'arbre d'enroulement (3), qui, au moyen d'un organe de temporisation (18 ; 18a), réduit ou supprime pendant un temps limité la force d'enroulement du système à ressorts de rappel (4, 17 ; 17a) dans une position déroulée de la structure plane (1 ; 1 a) entre la position de repos enroulée et la position de protection déroulée, et la rétablit après un laps de temps prédéfini par l'organe de temporisation (18 ; 18a).

2. Dispositif de séparation selon la revendication 1, **caractérisé en ce que** le système à ressorts de rappel (4, 17 ; 17a) est formé par un mouvement sériel avec un ressort spiral (4) plus puissant et un ressort de confort (17 ; 17a) moins puissant agissant dans le même sens, sachant que ce mouvement est conçu de telle manière que, pendant un certain laps de temps, une force d'enroulement plus importante agit entre la position de repos enroulée et la position déroulée, et qu'à partir de la position déroulée agit une force d'enroulement plus faible, et sachant que l'organe de temporisation (18 ; 18a) est associé à ce mouvement de telle manière que l'action de la plus faible force d'enroulement est limitée à un laps de temps défini et qu'après expiration du laps de temps a lieu une commutation sur la force d'enroulement plus importante.

3. Dispositif de séparation selon la revendication 1 ou 2, **caractérisé en ce que** l'organe de temporisation (18) est muni d'une roue libre dans le sens opposé au sens d'enroulement.

4. Dispositif de séparation selon la revendication 1, 2 ou 3, **caractérisé en ce qu'**un frein visqueux, en particulier un frein au silicone (18), est prévu comme organe de temporisation.

5. Dispositif de séparation selon la revendication 2 ou 3, **caractérisé en ce que**, pour obtenir la commutation du ressort spiral (4) et du ressort de confort (17), est prévu un organe de manoeuvre (13, 6, 16, 22) présentant un élément de commutation (13 ; 13a) qui interagit avec l'organe de temporisation (18, 20) au moyen d'une denture (21).

6. Dispositif de séparation selon la revendication 5, **caractérisé en ce que** l'organe de temporisation (18, 20) est formé par un organe tournant muni d'un pignon et qui est fixé rigidement au boîtier et excentré par rapport à un axe de rotation de l'arbre d'enroulement (3).

7. Dispositif de séparation selon la revendication 5, **caractérisé en ce qu'**au moins une section de la circonférence de l'élément de commutation (13 ; 13a) est munie d'une denture circonférentielle (21 ; 21 a).
